# EUROPEAN PATENT APPLICATION

(11) **EP 4 502 076 A1**
(43) Date of publication of application: **05.02.2025**
(21) Application number: 23779330.2
(22) Date of filing: 07.03.2023
(51) Int. Cl.: C08L 101/00, C08F 32/00, C08G 61/08, C08L 45/00, C08L 65/00, G02B 1/04

(54) **RESIN COMPOSITION, MOLDED BODY, AND OPTICAL MEMBER**

(30) Priority: 29.03.2022 JP 2022054619
(71) Applicant: Zeon Corporation, Tokyo 100-8246 (JP)
(72) Inventor: KOMATSUBARA, Takuya, Tokyo 100-8246 (JP)
(74) Representative: Maiwald GmbH
(86) International application number: PCT/JP2023/008674
(87) International publication number: WO 2023/189303

(57) **Abstract**

Provided is a resin composition including an alicyclic structure-containing polymer, capable of alleviating a problem of cobwebbing in injection molding, and imparting excellent strength when formed into an injection-molded product. The resin composition disclosed herein includes an alicyclic structure-containing polymer. The resin composition includes a component having a molecular weight of 100,000 or more in terms of polyisoprene at an area ratio of 0.5% or more and 20% or less, with respect to the total area of a GPC chart obtained through GPC measurement with an RI detector, and satisfies Formula (1): Mz/Mw≥Mw/Mn, Mz being a z-average molecular weight, Mw being a weight average molecular weight, Mn being a number average molecular weight, in terms of polyisoprene in the GPC measurement.

## Description

### TECHNICAL FIELD

The disclosure relates to a resin composition, a molded product, and an optical member.

### BACKGROUND

Alicyclic structure-containing polymers are excellent in such properties as transparency, moisture resistance, and heat resistance, and used in optical members such as optical lenses by taking advantage of these properties.

For example, Patent Literature (PTL) 1 describes a norbornene-based polymer satisfying (ηA-ηB)/ηB×100<60, where ηA is the melt viscosity measured at a temperature of 290°C and a shear rate of 200 (1/s), and ηB is the melt viscosity measured at a temperature of 290°C and a shear rate of 2000(1/s), which is capable of providing an optical device with a large optically effective area.

### CITATION LIST

### Patent Literature

PTL 1: WO2014/103788A

### SUMMARY

### (Technical Problem)

In producing optical members using a thermoplastic resin, an injection molding is generally used as a method of forming the resin. However, alicyclic structure-containing polymers are likely to generate cobwebbing during the injection molding, causing such problems as defects in appearance of the resulting product.

Further, there is an increasing demand for optical members having excellent strength, in view of thin-wall formability.

It could be helpful to provide a resin composition containing an alicyclic structure-containing polymer, which alleviates a problem of cobwebbing in injection molding and imparts excellent strength when formed into an injection-molded product.

### (Solution to Problem)

The present disclosure aims to advantageously solve the aforementioned problems, and the gist thereof is as follows.
[1] A resin composition comprising an alicyclic structure-containing polymer, wherein:
   the resin composition includes a component having a molecular weight of 100,000 or more in terms of polyisoprene at an area ratio of 0.5% or more and 20% or less, with respect to the total area of a GPC chart obtained through GPC measurement with an RI detector; and
   the resin composition satisfies Formula (1): Mz/Mw≥Mw/Mn, Mz being a z-average molecular weight, Mw being a weight average molecular weight, Mn being a number average molecular weight, in terms of polyisoprene in the GPC measurement.
[2] The resin composition according to [1], wherein the component having a molecular weight of 100,000 or more in terms of polyisoprene constitutes the alicyclic structure-containing polymer.
[3] The resin composition according to [1], wherein the component having a molecular weight of 100,000 or more in terms of polyisoprene includes a thermoplastic resin (provided that a thermoplastic resin containing an alicyclic structure is excluded).
[4] The resin composition comprising according to [3], wherein the thermoplastic resin (provided that a thermoplastic resin containing an alicyclic structure is excluded) is included at 0.5 parts by mass or more and 50 parts by mass or less, with respect to 100 parts by mass of the alicyclic structure-containing polymer.
[5] The resin composition comprising according to any of [1] to [4], wherein the alicyclic structure-containing polymer is a norbornene-based polymer.
[6] The resin composition comprising according to [5], wherein the norbornene-based polymer is a norbornene-based ring-opening polymer hydride.
[7] The resin composition according to [5], wherein the norbornene-based polymer is a norbornene-based addition polymer.
[8] A molded product of the resin composition according to any of [1] to [7].
[9] An optical member formed of the molded product according to [8].

The resin composition disclosed herein is a resin composition including an alicyclic structure-containing polymer, in which the resin composition includes a component having a molecular weight (hereinafter, also simply referred to as "molecular weight") of 100,000 or more in terms of polyisoprene at an area ratio of 0.5% or more and 20% or less, with respect to the total area of a GPC chart obtained through GPC measurement with an RI detector; and the resin composition satisfies Formula (1): Mz/Mw≥Mw/Mn, Mz being a z-average molecular weight, Mw being a weight average molecular weight, Mn being a number average molecular weight, in terms of polyisoprene in the GPC measurement.

Here, the GPC measurement with an RI detector was conducted under the conditions according to Examples described later. The molecular weight (Mz, Mw, or Mn) as used herein refers to a value in terms of isoprene in the GPC measurement with an RI detector according to such conditions.

In the resin composition including an alicyclic structure-containing polymer as disclosed herein, the resin composition contains a predetermined amount of the component having a molecular weight of 100,000 or more, has a molecular weight distribution satisfying Formula (1): Mz/Mw≥Mw/Mn, with a molecular distribution spreading largely toward a higher molecular weight side. Therefore, it can be estimated that the disclosed resin composition suitably contains long-chain polymers, which can be considered to alleviate cobwebbing in injection molding, and to provide a molded product excellent in strength.

The component having a molecular weight of 100,000 or more may constitute an alicyclic structure-containing polymer contained in the resin composition, which is advantageous in this case in terms of transparency.

The component having a molecular weight of 100,000 or more may be a thermoplastic resin (provided that a thermoplastic resin containing an alicyclic structure is excluded), and thus various properties can be imparted to the resin composition according to the type of the thermoplastic resin.

From the viewpoint of sufficiently obtaining this effect, the thermoplastic resin (provided that a thermoplastic resin containing an alicyclic structure is excluded) is included advantageously at 0.5 parts by mass or more and 50 parts by mass or less, with respect to 100 parts by mass of the alicyclic structure-containing polymer.

The alicyclic structure-containing polymer contained in the resin composition may be a norbornene-based polymer. The norbornene-based polymer is preferably a norbornene-based ring-opening polymer hydride or a norbornene-based addition polymer from the viewpoint of such properties as mechanical strength and heat resistance.

The present disclosure also relates to a molded product of the resin composition. The resin composition contains an alicyclic structure-containing polymer, and can be preferably used for optical member applications utilizing this feature.

### (Advantageous Effect)

According to the present disclosure, it is possible to provide a resin composition containing an alicyclic structure-containing polymer, which alleviates problem of cobwebbing in injection molding and imparts excellent strength when formed into an injection-molded product.

### BRIEF DESCRIPTION OF THE DRAWINGS

In the accompanying drawing:

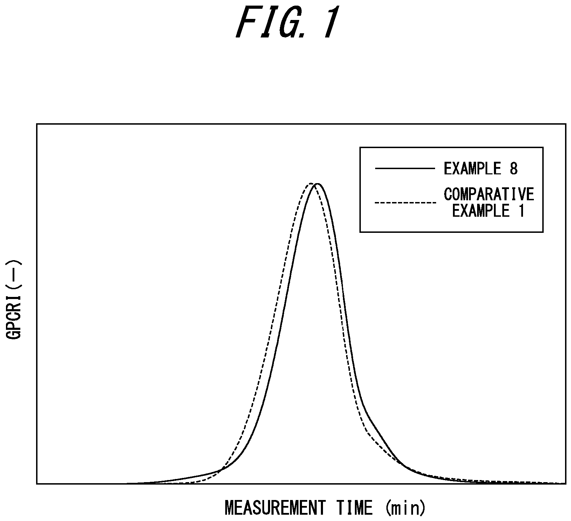

FIG. 1 is a GPC chart of Example 8 and Comparative Example 1.

### DETAILED DESCRIPTION

The following provides a detailed description of embodiments of the present disclosure.

The resin composition disclosed herein includes an alicyclic structure-containing polymer.

### <Alicyclic Structure-containing Polymer>

The alicyclic structure-containing polymer is not particularly limited as long as it contains an alicyclic structure in the structure of the polymer. The alicyclic structure can be contained in the main chain and/or the side chain, and the alicyclic-structure containing polymer preferably contains the alicyclic structure in the main chain from the viewpoint of mechanical strength, heat resistance, and the like.

The alicyclic structure-containing polymer is preferably a thermoplastic resin.

Examples of the alicyclic structure include a saturated cyclic hydrocarbon (cycloalkane) structure and an unsaturated cyclic hydrocarbon (cycloalkene) structure. From the viewpoint of mechanical strength, heat resistance, and the like, a cycloalkane structure is more preferable.

The number of carbon atoms constituting the alicyclic structure is not particularly limited, and may be 4 or more and 30 or less carbon atoms. From the viewpoint of mechanical strength and heat resistance, the number of carbon atoms is preferably 4 or more. From the viewpoint of formability, the number of carbon atoms is preferably 30 or less.

Examples of the alicyclic structure-containing polymer include a norbornene-based polymer, a vinyl alicyclic hydrocarbon polymer, and the like. These may be used alone or in combination of two or more thereof in any ratio.

### [Norbornene-based Polymer]

Examples of the alicyclic structure-containing polymer include a norbornene-based polymer. The norbornene-based polymer is obtained by polymerizing monomers each having a norbornene skeleton (hereinafter, also referred to as "norbornene monomers"). The norbornene-based polymer may include the one obtained by ring-opening polymerization and the other obtained by addition polymerization, and both may be used.

Examples of the polymer obtained by ring-opening polymerization include: a ring-opening polymer of norbornene monomers; a ring-opening polymer of norbornene monomers and other monomers capable of ring-opening copolymerization with the norbornene monomers, and hydrides thereof.

Examples of the polymer obtained by addition polymerization include: an addition polymer of norbornene monomers; and an addition polymer of norbornene monomers and other monomers copolymerizable with the norbornene monomers.

From the viewpoint of heat resistance, mechanical strength, and the like, a ring-opening polymer hydride of norbornene monomers and an addition polymer of norbornene monomers are preferable.

### (Norbornene Monomer)

Examples of the norbornene monomers include tetracyclododecene compounds, norbornene compounds, dicyclopentadiene compounds, and methanol tetrahydrofluorene compounds.

Examples of the tetracyclododecene compounds may include tetracyclo[4.4.0.1^{2,5}.1^{7,10}]-3-dodecene(tetracyclododecene), tetracyclo[4.4.0.1^{2,5}.1^{7,10}]-3-dodecene, 8-methyltetracyclo[4.4.0.1^{2,5}.1^{7,10}]-3-dodecene, 8-ethyltetracyclo[4.4.0.1^{2,5}.1^{7,10}]-3-dodecene, 8-ethylidenetetracyclo[4.4.0.1^{2,5}.1^{7,10}]-3-dodecene, 8,9-dimethyltetracyclo[4.4.0.1^{2,5}.1^{7,10}]-3-dodecene, 8-ethyl-9-methyltetracyclo[4.4.0.1^{2.5}.1^{7,10}]-3-dodecene, 8-ethylidene-9-methyltetracyclo[4.4.0.1^{2,5}.1^{7,10}] -3-dodecene, and 8-methyl-8-carboxymethyltetracyclo[4.4.0.1^{2,5}.1^{7,10}]-3-dodecene.

Examples of the norbornene compounds may include bicyclo[2.2.1]hept-2-ene (commonly known as norbornene), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-ethylidene-bicyclo[2.2.1]hept-2-ene, 5-vinyl-bicyclo[2.2.1]hept-2-ene, 5-propenylbicyclo[2.2.1]hept-2-ene, 5-methoxycarbonyl-bicyclo[2.2.1]hept-2-ene, 5-cyanobicyclo[2.2.1]hept-2-ene, and 5-methyl5-methoxycarbonyl-bicyclo[2.2.1]hept-2-ene.

Examples of the dicyclopentadiene compounds include tricyclo[4.3.0^{1,6}.1^{2,5}]deca-3,7-diene (commonly known as dicyclopentadiene), 2-methyldicyclopentadiene, 2,3-dimethyldicyclopentadiene, and 2,3-dihydroxydicyclopentadiene.

Examples of the methanotetrahydrofluorene compounds include 7,8-benzotricyclo[4.3.0.1^{2,5}]deca-3-ene (commonly known as methanotetrahydrofluorene: also referred to as 1,4-methano-1,4,4a,9a-tetrahydrofluorene), 1,4-methano-8-methyl-1,4,4a,9a-tetrahydrofluorene, 1,4-methano-8-chloro-1,4,4a,9a-tetrahydrofluorene, and 1,4-methano-8-bromo-1,4,4a,9a-tetrahydrofluorene.

These norbornene monomers may be used alone or in combination of two or more kinds thereof in any ratio.

From the viewpoint of improving heat resistance, tetracyclododecene compounds are preferable. The amount of the tetracyclododecene compounds, in the total monomers, may be 5 mass% or more and 50 mass% or less, preferably 10 mass% or more, more preferably 15 mass% or more, and preferably 45 mass% or less, more preferably 40 mass% or less. When the amount of the tetracyclododecene compounds falls within the above ranges, favorable heat resistance can be easily obtained while maintaining formability.

Methanotetrahydrofluorene compounds are preferable from the viewpoint that favorable birefringence can be easily obtained when used for an optical lens or the like. The amount of the methanotetrahydrofluorene compounds, in the total monomers, may be 10 mass% or more and 90 mass% or less, preferably 50 mass% or more, more preferably 60 mass% or more, and preferably 80 mass% or less. When the amount of the methanotetrahydrofluorene compounds falls within the aforementioned rages, favorable birefringence can be easily obtained when used for an optical lens.

From the viewpoint of easy adjustment of the glass transition temperature, norbornene compounds are preferable. The amount of the norbornene compounds, in the total monomers, may be 20 mass% or less, preferably 1 mass% or more, more preferably 3 mass% or more, and preferably 15 mass% or less, more preferably 10 mass% or less. When the amount is within the aforementioned ranges, favorable heat resistance can be obtained.

In view of balancing between mechanical strength and formability, dicyclopentadiene compounds can be used. The amount of the dicyclopentadiene compounds, in the total monomers, may be 10 mass% or less, and preferably 5 mass% or less. When the amount is within the aforementioned ranges, a polymer having excellent balance between mechanical strength and formability can be obtained with birefringence being maintained, when used for an optical lens.

Of those, norbornene-based polymer including tetracyclododecene compounds by 5 mass% or more and 50 mass% or less, methanotetrahydrofluorene compounds by 10 mass% or more and 90 mass% or less, and norbornene compounds by 1 mass% and 15 mass% (where the total amount of the tetracyclododecene compounds, the methanotetrahydrofluorene compounds, and the norbornene compounds is 100 mass%) is preferable, as it can provide a norbornene-based ring-opening polymer hydride that is excellent in balance of thin-wall formability, birefringence of the resulting molded product, and heat resistance of the resulting molded product.

### (Ring-opening Polymer of Norbornene Monomers)

The ring-opening polymer of norbornene monomers or the ring-opening polymer of norbornene monomers and other monomers capable of ring-opening copolymerization therewith can be obtained by polymerizing a monomer component in the presence of a known ring-opening polymerization catalyst. As the ring-opening polymerization catalyst, for example, a catalyst formed of a halide of metals such as ruthenium or osmium, a nitrate or an acetylacetone compound, and a reducer, or a catalyst formed of a halide of metals such as titanium, zirconium, tungsten, or molybdenum or acetylacetone compound and an organic aluminum compound can be used.

Examples of other monomers capable of ring-opening copolymerization with the norbornene monomers include monocyclic olefin monomers such as cyclohexene, cycloheptene, and cyclooctene.

### (Ring-opening Polymer Hydride of Norbornene Monomers)

The ring-opening polymer hydride of norbornene monomers is usually obtained by adding, to a polymer solution of the aforementioned ring-opening polymer, a publicly-known hydrogenation catalyst containing a transition metal such as nickel or palladium, and hydrogenating the carbon-carbon unsaturated bond.

### (Addition Polymer of Norbornene Monomers)

The addition polymer of norbornene monomers or the addition polymer of norbornene monomers and other monomers copolymerizable therewith can be obtained by polymerizing these monomers using a publicly-known addition polymerization catalyst, for example, a catalyst composed of a titanium, zirconium, or vanadium compound and an organoaluminum compound.

Other monomers that can be addition-copolymerizable with norbornene monomers include, for example, α-olefins having 2 to 20 carbon atoms, such as ethylene, propylene, 1-butene, 1-pentene, and 1-hexene, and derivatives thereof; cycloolefins such as cyclobutene, cyclopentene, cyclohexene, cyclooctene, and 3a,5,6,7a-tetrahydro-4,7-methano-1H-indene, and derivatives thereof; and non-conjugated dienes such as 1,4-hexadiene, 4-methyl-1,4-hexadiene, 5-methyl-1,4-hexadiene, and 1,7-octadiene. Of those, α-olefin is preferable, and ethylene is particularly preferable.

In the addition polymer of norbornene monomers or in the addition polymer of other monomers addition-copolymerizable with the norbornene monomers, norbornene monomers may be used alone or in combination or two or mor kinds in any ratio. Other monomers addition-copolymerizable with the norbornene monomers may be used alone or in combination of two or more kinds thereof in any ratio.

When the norbornene monomers and the other monomers addition-copolymerizable therewith are subjected to addition polymerization, the ratio of structural units derived from the norbornene monomers and structural units derived from the other monomers addition-copolymerizable in the addition polymer may be selected to be in the range of 70:30 to 1:99, preferably 50:50 to 3:97, and more preferably 40:60 to 5:95 by mass ratio.

Of those, from the viewpoint of heat resistance, mechanical strength, formability, and the like, it is preferable to carry out addition copolymerization of norbornene monomers and other monomers addition-copolymerizable therewith, and addition copolymer of norbornene monomers and ethylene is particularly preferable.

Also preferable as the norbornene-based polymer is a polymer produced by polymerizing norbornene monomers in the presence of an α-olefin having 14 or more and 40 or less carbon atoms.

The α-olefin having 14 or more and 40 or less carbon atoms is not particularly limited as long as the number of carbon atoms is 14 or more and 40 or less, and examples thereof include substituted olefins having one or more substituents on an alkyl chain, such as 3-methyltetradecene, 4-methyltetradecene, 10-methyltetradecene, and 5-cyclohexylhexadecene: linear α-olefins such as 1-tetradecene, 1-hexadecene, 1-octadecene, 1-eicosacene, 1-docosene, and 1-tetracontene. Linear α-olefins having 16 or more and 30 or less carbon atoms are particularly preferable.

The structural unit derived from an α-olefin having 14 or more and 40 or less carbon atoms is included at preferably 0.5 parts by mass or more and 5.0 parts by mass or less, more preferably 1.0 parts by mass or more and 4.0 parts by mass or less, and particularly preferably 1.3 parts by mass or more and 3.0 parts by mass or less, with respect to 100 parts by mass of the total amount of the other monomers copolymerizable with norbornene monomers. In these ranges, the glass transition temperature can fall within an appropriate range, which can, for example, suppress deterioration of birefringence in the vicinity of the gate when formed int a molded product.

Structural units derived from α-olefins can be introduced at the molecular ends of the ring-opening polymer hydrides of norbornene monomers. When α-olefins reacts (chain transfer reaction) with the active ends of the polymerization catalyst in which the polymerization reaction has progressed, the active ends of the polymerization catalyst are generated at the structural ends derived from α-olefins. Subsequent hydrogenation of the olefins after the polymerization reaction has progressed between the active ends and monomers can introduce structural units derived from α-olefins at the molecular ends.

For example, structural units derived from α-olefins can be introduced at the molecular ends of an addition copolymer of norbornene monomers and ethylene.

### (Chain Transfer Agent)

The norbornene-based polymer can be produced by polymerizing norbornene monomers in the presence of a chain transfer agent (also referred to as a molecular weight adjuster) to adjust the molecular weight.

The chain transfer agent is not particularly limited, and examples thereof include α-olefins such as 1-butene, 1-hexane, and 1-octene; styrenes such as styrene and vinyltoluene; ethers such as ethyl vinyl ether, isobutyl vinyl ether, and allyl glycidyl ether; halogen-containing vinyl compounds such as allyl chloride; oxygen-containing vinyl compounds such as glycidyl methacrylate; nitrogen-containing vinyl compounds such as acrylamide; non-conjugated dienes such as 1,4-pentadiene, 1,5-hexadiene, 1,6-heptadiene, 2-methyl-1,4-pentadiene, and 2,5-dimethyl-1,5 hexadiene; or conjugated dienes such as 1,3-butadiene, 2-methyl-1,3-butadiene, 2,3-dimethyl-1,3-butadiene, 1,3-pentadiene, and 1,3-hexadiene. Of those, α-olefins are preferable for the ease of molecular weight adjustment, and the α-olefin having 14 to 40 carbon atoms can function as a chain transfer agent.

As the chain transfer agent, two or more kinds of the aforementioned linear α-olefins having 14 or more and 40 or less carbon atoms may be combined, or the linear α-olefins having 14 or more and 40 or less carbon atoms may be combined with other chain transfer agents or styrenes. The addition amount of the chain transfer agent can be adjusted according to the desired molecular weight.

The norbornene-based ring-opening polymer hydride and the norbornene-based addition polymer may have a branched structure. The branched structure can be introduced by using a monomer having two or more polymerization reaction points in the same molecule (for example, vinyl norbornene, divinylbenzene, or the like) in the polymerization.

### [Vinyl Alicyclic Hydrocarbon Polymer]

Examples of the alicyclic structure-containing polymer other than the norbornene-based polymer include vinyl alicyclic hydrocarbon polymers.

Specific examples of the vinyl alicyclic hydrocarbon polymer include a polymer of vinyl alicyclic hydrocarbon monomers such as vinylcyclohexene and vinylcyclohexane and a hydride thereof; a hydride of an aromatic ring portion of a polymer of vinyl aromatic based monomers such as styrene and α-methylstyrene; a vinyl alicyclic hydrocarbon polymer; and a copolymer such as a random copolymer, a block copolymer of vinyl aromatic based monomers and other monomers copolymerizable with the monomers and a hydride thereof. Specific examples of the block copolymer include di-block, tri-block, more multiblock, incline block copolymers, and the like.

The hydrogenation reaction is carried out by contacting an alicyclic structure-containing ring-opening polymer with hydrogen in the presence of a hydrogenation catalyst, according to a conventional method. Specific examples of the hydrogenation method include the method described in JP2001048924A.

### [Molecular Weight]

The alicyclic structure-containing polymer preferably has a Mw of 5000 or more, more preferably 8000 or more, and preferably 80000 or less, more preferably 70000 or less, and still more preferably 50000 or less, from the viewpoint of mechanical strength of the resulting molded product. From the viewpoint of heat resistance, the glass transition temperature is preferably 100°C or higher, and more preferably 110°C or higher. When two or more alicyclic structure-containing polymers are used, the aforementioned Mw and glass transition temperature each refer to Mw and the glass transition temperature for the combination of two or more alicyclic structure-containing polymers, and the combination may include an alicyclic structure-containing polymer having a Mw of more than 80000 or a glass transition temperature of less than 100°C.

Here, the glass-transition temperature is measured at a heating rate of 10°C/minute based on JIS K 6911 using a differential scanning calorimeter.

### <Component having a molecular weight of 100,000 or more>

The resin composition as disclosed herein includes a component having a molecular weight of 100,000 or more in terms of polyisoprene, at an area ratio of 0.5% or more and 20% or less with respect to the total area of a GPC chart obtained through GPC measurement with an RI detector. The area ratio is preferably 0.6% or more, more preferably 0.7% or more from the viewpoint of cobwebbing in injection molding, and is also preferably 15% or less, more preferably 13% or less, and particularly preferably 10% or less, from the viewpoint of formability.

The component having a molecular weight of 100,000 or more may constitute an alicyclic structure-containing polymer included in the resin composition. That is, the component may be a component having a molecular weight of 100,000 or more in the alicyclic structure-containing polymer.

When a single alicyclic structure-containing polymer is used alone, the molecular weight distribution thereof can be adjusted so that the component having a molecular weight of 100,000 or more in the resin composition satisfies the predetermined area ratio in GPC measurement.

When multiple alicyclic structure-containing polymers are used in combination, the average molecular weight and the molecular weight of the multiple alicyclic structure-containing polymers to be combined can be adjusted so that the component having a molecular weight of 100,000 or more in the resin composition satisfies the predetermined area ration in GPC measurement. For example, alicyclic structure-containing polymers each having a Mw of 60000 or more and 700000 or less may be used.

The resin composition may contain a thermoplastic resin (provided that a thermoplastic resin containing an alicyclic structure is excluded), so that the component having a molecular weight of 100,000 or more in the resin composition satisfies the predetermined area ratio in GPC measurement. The resin composition may be blended with a high-molecular-weight thermoplastic resin that includes a component having a molecular weight of 100,000 or more, so as to adjust the area ratio. For example, a thermoplastic resin having a Mw of 60000 or more and 300000 or less may be used.

The thermoplastic resin is not particularly limited, and may be selected according to desired characteristics. Examples thereof include a chain olefin-based resin; a (meth)acrylic resin; a halogen-containing resin such as a vinyl chloride-based resin or a fluorine-based resin; a polyester-based resin; and a polycarbonate-based resin. From the viewpoint of processability, resins such as a chain olefin-based resin and (meth)acrylic resin are preferable. These resins may be used alone or in combination of two or more thereof in any ratio.

Here, (meth)acrylic means methacrylic and/or acrylic.

Examples of the chain olefin-based resin include polyethylene and polypropylene.

Examples of the (meth)acrylic resin include polymethyl methacrylate.

The amount of the thermoplastic resin, with respect to 100 parts by mass of the alicyclic structure-containing polymer, may be 0.5 parts by mass or more and 50 parts by mass or less. From the viewpoint of cobwebbing in injection molding, the amount is preferably 0.6 parts by mass or more, more preferably 0.7 parts by mass or more. From the viewpoint of formability, the amount is preferably 20 parts by mass or less, more preferably 18 parts by mass or less, and still more preferably 16 parts by mass or less.

### <Formula (1): Mz/Mw≥Mw/Mn >

The resin composition (including an alicyclic structure-containing polymer and optionally a thermoplastic resin (provided that a thermoplastic resin constituting the alicyclic structure-containing polymer is excluded)) as disclosed herein satisfies Formula (1): Mz/Mw≥Mw/Mn, with Mz being a z-average molecular weight, Mw being a weight average molecular weight, and Mn being a number average molecular weight, in terms of polyisoprene in the aforementioned GPC measurement.

Here, Mw/Mn is an index indicating the spread of the molecular weight distribution. When the value is larger, the molecular weight distribution is wider.

Mz/Mw is also an index indicating the spread of the molecular weight distribution, more specifically, the spread of the high molecular weight side as compared with Mw/Mn. When these index values are larger, the molecular weight distribution is wider toward the high molecular weight side.

The resin composition as disclosed herein satisfies Formula (1), in which Mz/Mw is equal to Mw/Mn or greater than Mw/Mn, and the molecular weight distribution is relatively wider toward the high molecular weight side.

Mw/Mn is preferably 1.05 or more, more preferably 1.10 or more from the viewpoint of formability, and is preferably 5.00 or less, more preferably 4.50 or less, from the viewpoint of mechanical strength.

Mz/Mw is preferably 1.50 or more and more preferably 1.55 or more from the viewpoint of cobwebbing in injection molding, and is preferably 5.00 or less and more preferably 4.50 or less from the viewpoint of formability.

Mz/Mw is preferably 1.01 times or more of Mw/Mn and more preferably 1.03 times or more from the viewpoint of cobwebbing in injection molding, and is preferably 2.00 times or less and more preferably 1.90 times or less from the viewpoint of formability.

In the resin composition as disclosed herein, Mw is 5000 or more and 90000 or less. From the viewpoint of mechanical strength, it is preferably 6000 or more and more preferably 8000 or more from the viewpoint of mechanical strength. From the viewpoint of formability, it is preferably 80000 or less, more preferably 70000 or less, and still more preferably 50000 or less.

When a single alicyclic structure-containing polymer is used alone, the molecular weight distribution thereof may be adjusted such that the resin composition satisfies Formula (1).

When multiple alicyclic structure-containing polymers are used in combination, the average molecular weight and the molecular weight distribution of the alicyclic structure-containing polymers to be combined may be adjusted such that the resin composition satisfies Formula (1).

The resin composition may contain a thermoplastic resin (provided that a thermoplastic resin containing an alicyclic structure is excluded) such that the resin composition satisfies Formula (1).

### <Chemical Composition>

The resin composition as disclosed herein includes an alicyclic structure-containing polymer and optionally a thermoplastic resin (provided that a thermoplastic resin constituting an alicyclic structure-containing polymer is excluded), to the amount of preferably 95.00 mass% or more, and more preferably 96.00 mass% or more, in the resin composition.

### <Other Components>

The resin composition as disclosed herein may contain various additives as long as the disclosed effects are not impaired. The amount(s) of the additive(s) is usually in the range of 5.00 mass% in the resin composition.

Examples of the various additives include fillers, antioxidants, light stabilizers, mold release agents, flame retardants, antibacterial agents, wood flour, coupling agents, plasticizers, colorants, lubricants, silicone oils, foaming agents, surfactants, and mold release agents.

Examples of antioxidants include 3,5-di-t-butyl-4-hydroxytoluene, dibutylhydroxytoluene, 2,2'-methylenebis(6-t-butyl-4-methylphenol), 4,4'-butylidenebis(3-t-butyl-3-methylphenol), 4,4'-thiobis(6-t-butyl-3-methylphenol), α-tocophenol, 2,2,4-trimethyl-6-hydroxy-7-t-butylchroman, tetrakis[methylene-3-(3',5'-di-t-butyl-4'-hydroxyphenyl)propionate]methane, and pentaerythrityl-tetrakis[3-(3,5-dibutyl-4-hydroxyphenyl)propionate]. Of those, pentaerythrityl-tetrakis[3-(3,5-dibutyl-4-hydroxyphenyl)propionate] is particularly preferable.

### <Production Method >

The method for producing the resin composition as disclosed herein is not particularly limited, and the resin composition can be produced by mixing an alicyclic structure-containing polymer, optionally a thermoplastic resin (provided that a thermoplastic resin containing an alicyclic structure is excluded), and any other components. Examples of the method includes: a method of mixing the components using a Henschel mixer, a V-blender, a ribbon blender, a tumbler blender, or the like, followed by melt-kneading the mixture using a single-screw extruder, a twin-screw extruder, a kneader, a roll, or the like; a method of mixing, into a filtered solution of an alicyclic structure-containing polymer, an optional thermoplastic resin (provided that a thermoplastic resin containing an alicyclic structure is excluded) and other components, and thereafter removing volatile components such as a solvent from the solution.

The molded product as disclosed herein can be obtained by injection molding the resin composition disclosed herein. When the disclosed resin composition is used, it is possible to alleviate problem of cobwebbing in injection molding and to obtain an injection-molded product having excellent strength. In addition, the resin composition has an alicyclic structure-containing polymer, which can provide an injection-molded product having favorable birefringence.

The conditions for injection molding may be appropriately set, and for example, the resin temperature can be set to 200°C or higher and 350°C or lower. The resin temperature within this range is capable of readily ensure fluidity to provide favorable transferability, while suppressing deterioration of the resin to avoid burn marks, mold stains, and the like.

The mold temperature may be appropriately set, for example, to be equal to or higher than a temperature that is 20°C lower than the glass transition temperature of the alicyclic structure-containing polymer, but to be equal to or lower than a temperature that is 3°C lower than the glass transition temperature of the alicyclic structure-containing polymer. The mold temperature within this range is capable of providing favorable transferability and birefringence, reducing molding cycle time, which leads to favorable productivity.

Conditions of the measurement process may be appropriately set, and for example, with a screw rotational speed of 10 rpm or higher and 100 rpm or lower, and a back pressure of 3 MPa or higher and 10 MPa or lower.

The injection speed may be appropriately set, and may be a single-stage injection or a multi-stage injection. The injection speed may be set, for example, as the screw advancing speed of 2 mm/second or higher and 100 mm/second or lower. The injection speed within this range can readily avoid the resin composition solidifying and becoming unfillable during injection, and prevent appearance defects such as jetting in the resulting product.

The pressure in the pressure holding process may be appropriately set, which may be, for example, 20 MPa or lower. The pressure within this range can readily avoid molding defects such as increase in optical distortion or sprue clogging. The pressure holding time may be appropriately set, and preferably controlled in a short time so as not to cause gate seal or sprue clogging.

The cooling time in the cooling process may be appropriately determined in consideration of an improvement in optical characteristics due to an annealing effect in the mold and a decrease in productivity due to increase in cycle time.

The disclosed resin composition can be shaped by other methods than injection molding, such as by a compression molding method, an extrusion molding method, a blow molding method, and an inflation molding method.

The molded product of the present disclosure can be used for optical members. Examples of the optical members include optical lenses such as Fresnel lenses, lenticular lenses, f*θ* lenses, and lenses for cellular phone cameras; and optical devices such as diffraction gratings, prisms, and optical discs for blue lasers.

### EXAMPLES

Hereinafter, the present disclosure will be described in more detail with reference to Examples, but the present disclosure is not limited to these Examples.

In the following, parts and percentages are by mass unless otherwise indicated.

Various measurements for use in Examples are described below.

### <GPC Measurement>

Conditions for the GPC measurement are as follows. Through this measurement, the area ratio of the component with a molecular weight of 100,000 or more, the number-average molecular weight (Mn), the weight-average molecular weight (Mw), the z-average molecular weight (Mz), the molecular weight distribution (Mw/Mn), and Mz/Mw of the resin composition were determined.
Measuring device: HLC8320GPC (with RI detector) produced by Tosoh Corporation
Columns used: Three columns produced by Tosoh Corporation, including TSKgel G5000HXL, TSKgel G4000HXL, and TSKgel G2000HXL, which were used in series
Solvent: Cyclohexane
Flow rate: 1.0 ml/minute
Sample injection volume: 100 µml
Column temperature: 40°C
Sample concentration: 0.02 g/5 ml
Standard polyisoprene: Total 10 standard polyisoprenes with Mw=602, 1390, 3920, 8050, 13800, 22700, 58800, 71300, 109000, and 280000, produced by Tosoh Corporation

### <Cobwebbing>

The resin composition was evaluated by the length of a thin resin thread generated at the end of the sprue when the resin composition was injection molded at a resin temperature of 320°C. The length of the resin thread was measured for five spurs, and the average value was determined.

| | | |
|---|---|---|
| Average value | 50 mm or less: | A |
| Average value | more than 50 mm and 100 mm or less: | B |
| Average value | more than 100 mm and 150 mm or less: | C |
| Average value | above 150 mm: | D |

### <Bending Stress>

The resin composition was injection molded using a compact injection molding machine (produced by Rheo Labo Co., Ltd.) at a resin temperature of 280°C and a mold temperature of 125°C, to prepare a resin plate of 80 mm in length × 10 mm in width × 4 mm in thickness. This resin plate was used as a test piece and subjected to a bending test according to JIS K 7074, using a universal testing machine (produced by Instron com., product name "INSTRON5882"), under the test rate of 2 mm/minute to determine the bending stress (MPa).

| | | |
|---|---|---|
| Bending stress | 80 MPa or more: | A |
| Bending stress | more than 50 MPa and 80 MPa or less: | B |
| Bending stress | more than 20 MPa and 50 MPa or less: | C |
| Bending stress | 20 MPa or less: | D |

### <Birefringence>

The resin composition was injection molded using a compact injection molding machine (produced by Rheo Labo Co., Ltd.) at a resin temperature of 280°C and a mold temperature of 125°C, to prepare a resin plate of 70 mm in length × 30 mm in width × 3 mm in thickness. Using this resin plate as a test piece, the largest phase difference in the vicinity of the center of the test piece was measured using a birefringence/phase difference measuring machine htc (produced by Photonic Lattice, Inc., product name "WPA-100").

| | |
|---|---|
| The phase difference was 20 nm or less: | A |
| The phase difference was more than 20 nm and 30 nm or less: | B |
| The phase difference was more than 30 nm and 40 nm or less: | C |
| The phase difference was larger than 40 nm: | D |

The following components were used:

### <Norbornene-based Ring-opening Polymer Hydride A>

A dry, nitrogen-substituted polymerization reactor was charged with: 7 parts of a monomer mixture including 70% of methanotetrahydrofluorene (MTF), 25% of tetracyclododecene (TCD), and 5% of norbornene (NB) (1% based on the total amount of monomers used for the polymerization); 1600 parts of dehydrated cyclohexane; 4.5 parts of 1-hexene; 1.3 parts of diisopropyl ether, 0.33 parts of isobutyl alcohol; 0.84 parts of triisobutyl aluminum; and 30 parts of a cyclohexane solution of 0.66% tungsten hexachloride, and stirred at 55°C for 10 minutes.

Next, the reaction system was maintained at 55°C, and 693 parts of the monomer mixture and 72 parts of a cyclohexane solution of 0.77% tungsten hexachloride were both continuously added dropwise to the polymerization reactor for 150 minutes while the reaction system being stirred. After the dropwise addition ended, the reaction system was stirred for 30 minutes before 1.0 parts of isopropyl alcohol was added to stop the polymerization reaction. The polymerization reaction solution was measured by gas chromatography, and the monomer-to-polymer conversion rate was 100%.

Next, 300 parts of the polymerization reaction solution containing the aforementioned polymer was transferred to an autoclave equipped with a stirrer, and 100 parts of cyclohexane and 2.0 parts of a kieselguhr-supported nickel catalyst (produced by Clariant Catalysts, "Nisat760RL", nickel supporting ratio of 58%) were added. The autoclave, the inside of which was replaced with hydrogen, was thereafter subjected to reaction at 190°C under 4.5 MPa hydrogen pressure for 6 hours, to carry out hydrogenation reaction.

After the hydrogenation reaction ended, diatomaceous earth ("Radiolite^{®} (Radiolite is a registered trademark in Japan, other countries, or both) 1500" manufactured by Showa Chemical Industry Co., LTD.) was used as a filter bed, and a pressure filter ("Funda filter" manufactured by IHI Corp.) was used to pressure filter under a pressure of 0.25 MPa to obtain a colorless and transparent solution.

Next, 2.1 parts of pentaerythrityl-tetrakis[3-(3,5-di-t-butyl-4-hydroxyphenyl)propionate] ("Irganox^{®} 1010" (Irganox is a registered trademark in Japan, other countries, or both), produced by Ciba Specialty Chemicals Co., Ltd.) was added as an antioxidant, per 100 parts of the hydrogenated material, and dissolved in the obtained solution.

The solution was filtered through a filter ("Zeta Plus^{®} 30H" (Zeta Plus is a registered trademark in Japan, other countries, or both), produced by Cuno Filter Co., Ltd., pore size 0.5 to 1 µm), and thereafter the filtrate was filtered through a metal-fiber filter (produced by Nichidai Corporation, pore size 0.4 µm) to remove foreign substances.

Next, the aforementioned filtrate was subjected to removal of cyclohexane and other volatile components from the solution by using a cylindrical concentrate dryer (produced by Hitachi, Ltd.) at a temperature of 260°C and a pressure 1 kPa or less, and the solution was extruded in a molten state into a strand form from a die directly connected to the concentrator, and water cooled. The strand was cut by a pelletizer (produced by Osada Seisakusho Co., Ltd., "OSP-2") to obtain pellets of norbornene-based ring-opening polymer hydride A (MTF/TCD/NB=70/25/5). Mw of the norbornene-based ring-opening polymer hydride A was 25000.

### <Norbornene-based Ring-opening Polymer Hydride B>

A dry, nitrogen-substituted polymerization reactor was charged with 7 parts of monomer mixture, including 70% methanotetrahydrofluorene (MTF), 25% tetracyclododecene (TCD), and 5% norbornene (NB) (1% based on the total amount of monomers used for polymerization), 1600 parts of dehydrated cyclohexane, 0.86 parts of diethylaluminum ethoxide, and 40 parts of a 2.0% solution of tetrachlorotungsten phenylimide (tetrahydrofuran) in toluene, and stirred at 45°C for 10 minutes.

Next, the reaction system was kept at 45°C and being stirred, and 693 parts of the monomer mixture was continuously added dropwise to the polymerization reactor over 150 minutes, during which 4.5 parts of 1-hexane was added after 10 minutes of the dropwise addition. After the dropwise addition ended, the mixture was stirred for 30 minutes, before 1.0 parts of isopropyl alcohol was added to stop the polymerization reaction. The polymerization reaction solution was measured by gas chromatography, and the monomers-to-polymer conversion rate was 100%.

The solution was subjected to the process same as the process of and after the hydrogenation reaction for the norbornene-based ring-opening polymer hydride A, to obtain pellets of the norbornene-based ring-opening polymer hydride B (MTF/TCD/NB=70/25/5). The norbornene-based ring-opening polymer hydride B had Mw of 31100.

### <Norbornene-based Ring-opening Polymer Hydride C>

The norbornene-based ring-opening polymer hydride C (MTF/TCD/NB=70/25/5) was obtained in the same manner as the norbornene-based ring-opening polymer hydride B, except that 1-hexene was added after 5 minutes of the dropwise addition of the monomer mixture in polymerization. The norbornene-based ring-opening polymer hydride C had Mw of 26500.

### <Norbornene-based Ring-opening Polymer Hydride D>

The norbornene-based ring-opening polymer hydride D (MTF/TCD/NB=70/25/5) was obtained in the same manner as the norbornene-based ring-opening polymer hydride B except that 1-hexene was added at a timing prior to the dropwise addition of the monomer mixture in the polymerization. The norbornene-based ring-opening polymer hydride D had Mw of 22500.

### <Norbornene-based Ring-opening Polymer Hydride E>

Pellets of the norbornene-based ring-opening polymerized hydride E (MTF/TCD/NB/vinyl norbornene=70/25/5/0.5) were obtained in the same manner as in Example 1, except that 0.5% of vinyl norbornene was added to 100% of the monomer mixture of Example 1. The norbornene-based ring-opening polymer hydride E had Mw of 25400.

### <Norbornene-based Addition Polymer A>

Added to a 1000 ml autoclave, inside of which was replaced with nitrogen, was a stirrer, 300 parts of toluene, 1.74 parts of methylaluminoxane, and 20 parts of tetracyclododecene (TCD), which was added with 10 parts of a catalytic solution (CpTi (a toluene solution containing 0.25 µmol of ((t-Bu)₂C=N)Cl₂) while the entire system is being stirred at 50°C. Immediately after the addition of the catalytic solution, an ethylene (Et) gas was introduced to attain a pressure of 0.2 MPa, so as to initiate addition polymerization reaction. Then, the addition polymerization reaction was carried out for 60 minutes while the temperature and the ethylene pressure in the autoclave being maintained. After decompression, the content of the autoclave was transferred into a large amount of hydrochloric acid 2-propanol to precipitate the norbornene-based addition polymer A (TCD/Et=25/75). The norbornene-based addition polymer A had Mw of 31000.

### <Norbornene-based Ring-opening Polymer Hydride F (High Molecular Weight Body)>

The norbornene-based ring-opening polymer hydride F was produced in the same manner as the norbornene-based ring-opening polymer hydride A, except that 0.7 parts of 1-hexane was added in the polymerization, to thereby obtain pellets of the norbornene-based ring-opening polymer hydride F (MTF/TCD/NB=70/25/5). The norbornene-based ring-opening polymer hydrogenation F (high molecular weight body) had Mw of 120000.

### <Norbornene-based Ring-opening Polymer Hydride G (High Molecular Weight Body)>

The norbornene-based ring-opening polymer hydride G was produced in the same manner as the norbornene-based ring-opening polymer hydride A, except that 0.1 parts of 1-hexane was added in the polymerization, to thereby obtain pellets of the norbornene-based ring-opening polymer hydride G (MTF/TCD/NB=70/25/5). The norbornene-based ring-opening polymer hydride G (high molecular weight body) had Mw of 650000.

### <Norbornene-based Ring-opening Polymer Hydride H (High Molecular Weight Body)>

The norbornene-based ring-opening polymer hydride H was produced in the same manner as the norbornene-based ring-opening polymer hydride A, except that 2.0 parts of 1-hexane was added in the polymerization, to thereby obtain pellets of the norbornene-based ring-opening polymer hydride H (MTF/TCD/NB=70/25/5). The norbornene-based ring-opening polymer hydride H (high molecular weight body) had Mw of 55000.

### <Norbornene-based Addition Polymer B (High Molecular Weight Body)>

The norbornene-based addition polymer B was produced in the same manner as the norbornene-based addition polymer A, except that the reaction time was 10 minutes. The norbornene-based addition polymer B had Mw of 110000.

### <Polymethyl Methacrylate (PMMA) (High Molecular Weight Body)>

Added to a 1000 ml autoclave, inside of which was replaced with nitrogen, was a stirrer, 300 parts of pure water, and 0.02 parts of sodium lauryl sulfate, which was stirred for 1 hour. Thereafter, 150 parts of methyl methacrylate and 0.3 parts of azobis(isobutyronitrile) were added, which was subjected to polymerization reaction for 24 hours while the temperature in the autoclave being kept at 80°C. After the reaction, the content was filtered, washed with water, and dried, to obtain a PMMA polymer. PMMA had Mw of 155000.

### <Polypropylene (PP) (High Molecular Weight Body)>

Novatech TMPP Transparent-Grade MG03BD, produced by Japan Polypropylene Corporation
PP had Mw of 140000.

### <Polyethylene (PE) (High Molecular Weight Body)>

MIPELON XM220, an ultra-high molecular weight polyethylene powder (viscosity-average molecular weight: 2 million), produced by Mitsui Chemicals, Ltd.

### <Antioxidant>

Pentaerythrityl-tetrakis[3-(3,5-di-t-butyl-4-hydroxyphenyl)propionate]
Irganox^{®} 1010, manufactured by Ciba Specialty Chemicals, Inc.

### <Method of Preparing Composition>

The alicyclic structure-containing polymers and the high molecular weight bodies (which may not be contained in some cases) in the rows of the polymer and the high molecular weight body in Table 1 and the additives were kneaded at the ratios shown in Table 1 by a twin-screw kneader and extruded to obtain pelletized resin compositions.

The obtained resin compositions were subjected to various measurements. The results are given in Table 1. FIG. 1 is a GPC measurement chart of the resin compositions of Example 8 and Comparative Example 1.

### [Table 1]

**Table 1**

| | | Example 1 | Example 2 | Example 3 | Example 4 | Example 5 | Example 6 | Example 7 | Example 8 |
|---|---|---|---|---|---|---|---|---|---|
| Polymer | Alicyclic-structure Containing Polymer | Norbornene-based Ring-opening Polymer Hydride A | Norbomene-based Ring-opening Polymer Hydride A | Norbornene-based Ring-opening Polymer Hydride A | Norbornene-based Ring-opening Polymer Hydride A | Norbornene-based Ring- opening Polymer Hydride A | Norbornene-based Ring-opening Polymer Hydride A | Norbornene-based Ring-opening Polymer Hydride B | Norbornene-based Ring-opening Polymer Hydride C |
| | Amount used | 94.70% | 92.70% | 89.70% | 94.70% | 94.70% | 94.70% | 99.70% | 99.70% |
| High Molecular Weight Body | High Molecular Weight Speices | Norbornene-based Ring-opening Polymer Hydride F | Norbornene-based Ring-opening Polymer Hydride F | Norbornene-based Ring-opening Polymer Hydride F | Norbornene-based Ring-opening Polymer Hydride G | PMMA | PP | - | - |
| | Amount used | 5.00% | 7.00% | 10.00% | 5.00% | 5.00% | 5.00% | 0.00% | 0.00% |
| Additive | Antioxidant Amount used | 0.30% | 0.30% | 0.30% | 0.30% | 0.30% | 0.30% | 0.30% | 0.30% |
| Resin Composition | GPC Area Ratio of Component with weight average molecular weight (Mw) of 100,000 or more | 2.6% | 4.0% | 5.2% | 7.5% | 2.8% | 2.7% | 3.4% | 2.2% |
| | Mz/Mw | 2.70 | 3.52 | 3.71 | 3.85 | 2.86 | 2.80 | 2.36 | 2.07 |
| | Mw/Mn | 2.58 | 2.71 | 2.85 | 3.31 | 2.69 | 2.64 | 2.04 | 1.66 |
| | Mw | 30500 | 33000 | 35500 | 40200 | 33500 | 32800 | 31100 | 26500 |
| | Ratio of Mz/Mw to Mw/Mn | 1.05 | 1.30 | 1.30 | 1.16 | 1.06 | 1.06 | 1.16 | 1.25 |
| | Cobwebbing | B | A | A | A | B | B | A | A |
| | Bending Stress | B | B | A | A | B | B | A | A |
| | Birefringence | A | A | B | B | B | B | B | A |

**Table 1 (continued)**

| | | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|
| Polymer | Alicyclic-structure Containing Polymer | Norbornene-based Ring-opening Polymer Hydride D | Norbornene-based Addition Polymer A | Norbornene-based Ring-opening Polymer Hydride A | Norbornene-based Ring-opening Polymer Hydride A | Norbornene-based Ring-opening Polymer Hydride E | Norbornene-based Ring- opening Polymer Hydride A | Norbornene-based Ring-opening Polymer Hydride A | Norbornene-based Addition Polymer A |
| | Amount used | 99.70% | 94.70% | 99.70% | 99.30% | 99.70% | 99.40% | 94.70% | 99.70% |
| High Molecular Weight Body | High Molecular Weight Speices | - | Norbornene-based addition polymer B | - | polyethylene | - | Norbornene-based Ring- opening Polymer Hydride F | Norbornene-based Ring-opening Polymer Hydride H | - |
| | Amount used | 0.00% | 5.00% | 0.00% | 0.40% | 0.00% | 0.30% | 5.00% | 0.00% |
| Additive | Antioxidant Amount used | 0.30% | 0.30% | 0.30% | 0.30% | 0.30% | 0.30% | 0.30% | 0.30% |
| Resin Composition | GPC Area Ratio of Component with weight average molecular weight (Mw) of 100,000 or more | 0.6% | 2.7% | 0.1% | 1.0% | 1.5% | 0.4% | 0.8% | 0.4% |
| | Mz/Mw | 1.58 | 2.56 | 1.55 | 2.61 | 1.87 | 1.65 | 2.21 | 1.54 |
| | Mw/Mn | 1.50 | 2.14 | 1.71 | 3.15 | 2.34 | 1.73 | 2.34 | 1.93 |
| | Mw | 22500 | 36500 | 25500 | 33200 | 25400 | 26300 | 27800 | 31000 |
| | Ratio of Mz/Mw to Mw/Mn | 1.05 | 1.20 | 0.91 | 0.83 | 0.80 | 0.95 | 0.94 | 0.80 |
| | Cobwebbing | B | A | D | C | C | D | C | D |
| | Bending Stress | B | B | B | B | D | B | B | C |
| | Birefringence | B | A | A | D | B | A | A | A |

The resin compositions of Examples were each improved in cobwebbing and excellent in bending stress when formed into an injection-molded product. The resulting injection-molded products also exhibited favorable birefringence.

### INDUSTRIAL APPLICABILITY

According to the present disclosure, there is provided a resin composition containing an alicyclic structure-containing polymer, capable of alleviating a problem of cobwebbing in injection molding and excellent in strength when formed into an injection-molded product, and a molded product and an optical member made of the molded product. They are useful in optical member applications.

## Claims

1. A resin composition comprising an alicyclic structure-containing polymer, wherein:
the resin composition includes a component having a molecular weight of 100,000 or more in terms of polyisoprene at an area ratio of 0.5% or more and 20% or less, with respect to the total area of a GPC chart obtained through GPC measurement with an RI detector; and
the resin composition satisfies Formula (1): Mz/Mw≥Mw/Mn, Mz being a z-average molecular weight, Mw being a weight average molecular weight, Mn being a number average molecular weight, in terms of polyisoprene in the GPC measurement.

2. The resin composition according to claim 1, wherein the component having a molecular weight of 100,000 or more in terms of polyisoprene constitutes the alicyclic structure-containing polymer.

3. The resin composition according to claim 1, wherein the component having a molecular weight of 100,000 or more in terms of polyisoprene includes a thermoplastic resin (provided that a thermoplastic resin containing an alicyclic structure is excluded).

4. The resin composition according to claim 3, wherein the thermoplastic resin (provided that a thermoplastic resin containing an alicyclic structure is excluded) is included at 0.5 parts by mass or more and 50 parts by mass or less, with respect to 100 parts by mass of the alicyclic structure-containing polymer.

5. The resin composition according to claim 1, wherein the alicyclic structure-containing polymer is a norbornene-based polymer.

6. The resin composition according to claim 5, wherein the norbornene-based polymer is a norbornene-based ring-opening polymer hydride.

7. The resin composition according to claim 5, wherein the norbornene-based polymer is a norbornene-based addition polymer.

8. A molded product of the resin composition according to any one of claims 1 to 7.

9. An optical member formed of the molded product according to claim 8.
